# EUROPEAN PATENT APPLICATION

(11) **EP 0 982 939 A2**
(43) Date of publication of application: **01.03.2000**
(21) Application number: 99306549.9
(22) Date of filing: 19.08.1999
(51) Int. Cl.: H04N 5/253, H04N 5/257

(54) **Improvements relating to film scanners**

(30) Priority: 21.08.1998 GB 9818317; 09.09.1998 GB 9819677; 16.04.1999 GB 9908789
(71) Applicant: Cintel International Limited, Ware, Herts SG12 0AE (GB)
(72) Inventor: Mead, Terence William, Hertford, Herts SG14 3LE (GB); Clarke, Thomas Richard, Luton, Bedfordshire LU2 0PL (GB)
(74) Representative: Loveless, Ian Mark

(57) **Abstract**

A film scanner such as a telecine includes a light source for illuminating film and a light collection system.

The light collection system includes a diffuser which is arranged to diffuser light from scratched and unscratched areas of film, reducing the difference in intensity of light between such areas thereby reducing scratch and blemish visibility.

## Description

This invention relates to film scanners and the collection of light which has been scattered by blemishes and dirt on the film. The invention is particularly applicable to flying spot telecines.

The scanning of movie film to convert the images into an electrical signal is typified by television telecine scanners such as the URSA series and ADS 2 telecines manufactured by Cintel International Limited of Ware, Hertfordshire, England. The techniques used to scan film for television applications employ either rastered light systems, such as may be produced by a Cathode Ray Tube (CRT) and scanning system in conjunction with a photosensitive detector, or use a high intensity light source and solid state sensor such as line array and area array Charge Coupled Devices (CCD).

These techniques are well known in the art and are described, for example, in "TV & Video Engineers Reference Book" Chapter 39, Edited by Dr B. Townsend, Published by Butterworth & Heinemann ISBN 0-7506-1021-2. Solid state sensor telecines are also described in British patents GB-A-1,532,400 entitled "System for Scanning Films for Reproduction by Television", and GB-A-1,597,504 entitled "Single Line Scanning of Motion Picture Film".

Apart from scanning movie film using a telecine there is also a need to convert film images into electrical data for use in the print industry, for computer graphics, for clinical and research medicine applications, for industrial process applications, broadcast television stills applications, and for other purposes. More recently, the scanning of film for conversion into digital data has been undertaken at resolutions approaching the limits of film materials for electrical processing and then relaying back to film - the so called digital film process used extensively in modern movie production for special effects work. These film scanners alluded to are almost all devices which use solid state line array sensors of one form or another, and consequently employ a light source and optics path to illuminate the film prior to the sensor mechanism itself. An example of such a film scanner is described in British patent GB-2,286,309-B entitled High Resolution Film Scanner, and the corresponding United States Patent US-5,644,356.

In known film scanners such as CCD scanners it is usual to use a collimated light beam to scan the film for reasons of light collection efficiency. This presents a problem as collimated beams tend to accentuate the contrast between light and dark in the film due to the specular nature of the incident light producing the well known and understood Callier Effect of photographic printing. The Callier Effect is described in many text books on photography for example "The Focal Encyclopaedia of Film & Television Techniques", ISBN 0 240 50654 5.

Another disadvantage of using a highly collimated light to illuminate the film is that it will also accentuate any surface damage or blemishes on the film such as typified by scratches or fine particle dust. This is because the collimated light encountering a scratch will become scattered by the scratch profile so it does not enter the photo sensor, and when encountering dust particles is cut off from entering the film and is thereby eliminated from reaching the photo sensor, unless there is any diffraction of the light by the film grains.
It is a well understood phenomena of the silver halide/dye particles of film that they will, on a microscopic scale, scatter and diffuse the penetrating light on its path through the film and thus proportionately less will be collected by the imaging optics.

It is well known to alleviate the above mentioned disadvantages of collimated light beams by using a diffuser to diffuse the source of light before it enters the film. The diffuser ensures that light from a wide range of angles is incident on the film simultaneously. This increases the probability that some of the light will eventually reach the imaging optics and thence be imaged onto the photo sensor(s). This has the dual advantage of reducing the visibility of scratches, blemishes, and dust particles, and giving a more faithful reproduction of the tonal gradations within the film image.

Our copending British patent application GB-A-2,299,726 entitled "Diffusers for Film Scanners and the Like", describes the application of a micro lithographic diffuser material within the light path of a film scanner and the benefits obtained. United States patents US5,012,346 and US-5,155,596 describe the application of an integrating cylinder within a Xenon light system to provide a diffuse light source in a CCD sensor film scanner. SMPTE Journal, 1984,92,12 pp. 1294-1301 contains a paper by 1 Childs and J.R. Sanders of the British Broadcasting Corporation which describes an optical method of detecting film dirt which relies upon the transparency of colour film emulsions to infra red light, allowing dirt particles adhering to the film to be detected by an infra-red sensor. British Broadcasting Corporation Engineering Research Department Report 1985/4 "Electronic detection and concealment of film dirt", describes an electronic processing means for correcting detected film dirt on scanned images.

A variety of electronic equipment also exists for processing television, or data, signals to electronically eliminate, or mask, film scratches and dirt. This equipment is typified by the Snell & Wilcox NRS500 High Performance Digital Noise Reducer. These devices rely upon combinations of recursive, transversal, and in some cases temporal electronic filters.

In a flying spot film scanner, or flying spot telecine, the quality of the scan depends upon a uniform intensity, broad spectral response, rastered light beam generated by a cathode ray tube (CRT) having an accurate temporal: spatial relationship at the film plane since, for a given colour, just one photo sensor is used to detect the light emerging from the film. Thus at any instant in time the light through the film must illuminate just one film picture element (pixel) so that the detected light level, in that channel, is a precise measurement of the film pixel's density in that colour. The spatial size of the film pixel being determined by the system resolution required. Therefore a flying spot film scanner or telecine does not use a diffuse light source to analyse the film since the act of diffusing the beam prior to analysing the film would degrade the quality of the temporal: spatial relationship at the film plane i.e. the detected light would produce a density measurement proportional to a multitude of film pixels. Thus the CRT light beam needs to be highly focussed prior to illuminating the film. The focussed light is specular/collimated in nature. This results in film and/or dirt scratches being visible to the photo sensor. This is because when specular light encounters a film scratch it will normally be scattered by the scratch profile. The exact image consequence of this scattering is dependent upon whether the scratch is in the film substrate, or the film emulsion. In either case the scratch will scatter light away from the photo sensor.

A telecine system addressing the problem of light scattered by scratches is disclosed in WO 83/02869. In this system, the telecine includes means for redirecting light scatters by damage to the surface of film towards a photo detector. The means for collecting shown is a frusto-conical mirror or other arrangement of mirrors to collect as much light as possible scattered by scratches.

We have appreciated that both film scanners using diffuse incident light (such as CCD scanner) and film scanners using specular/collimated incident light (such as flying spot telecine) suffer the problem that scratches and/or dirt are visible on the scanned image. We have appreciated in particular, in relation to specular/collimated incident light scanners, that scratches and/or dirt are particularly visible because light is scattered and does not reach the light detector.

We have further appreciated that the visibility of scratches is because of a difference in the intensity of light reaching the detector in comparison to unscratched areas of film, and that the visibility can be reduced not only by increasing the amount of scattered light collected, but also by reducing the difference in intensity between light received from scratched and unscratched areas. This can be done by reducing the intensity of light received from unscratched areas. In particular, a combination of improving the collection of light from scratched areas, and decreasing the collection of light from unscratched areas will improve the ratio of intensity of light received from scratched areas and unscratched areas reducing scratch visibility.

Accordingly, in a broad aspect, the invention provides a film scanner including an optical system for reducing the difference in intensity of light received at a light detector from scratched and unscratched areas of film, in particular by using a diffuser to diffuse both light scattered by scratches and unscattered light.

In particular, there is provided a film scanner for producing electrical signals from a film image, comprising: a light source for illuminating film; and a light collection system for directing light modulated by the film to a light detector; and further comprising a diffuser for diffusing light modulated by film arranged to reduce the visibility of imperfections on film, wherein the light collection system is so arranged to image light diffused by the diffuser onto the detector.

The inclusion of a diffuser with the light collection system has the effect of reducing visibility of scratches. The diffuser may be of any diffusing material which by reflection, diffraction, refraction or interference effects diffuses incident light. The visibility of scratches is reduced because a greater proportion of scattered light to unscattered light is accepted by the light collection system than if no diffuser were in place.

The invention also resides in a light collection system for a film scanner for producing electrical signals from a film image, the film scanner comprising: a light source for illuminating film; the light collection system comprising means for directing light modulated by the film to a light detector; and further comprising a diffuser for diffusing light modulated by film arranged to reduce the visibility of imperfections on film, wherein the light collection system is so arranged to image light diffused by the diffuser onto the detector.

The light collection system and or the diffuser could be provided as an upgrade to an existing telecine.

The diffuser is preferably so arranged to diffuse light from scratched and unscratched areas of film. This allows light scattered by scratches to be gathered to reduce scratch visibility, and can be achieved by arranging the diffuser to reduce the difference in intensity of light from scratched and unscratched areas of film. To do this, the diffuser is so arranged to increase the collection of light from scratched areas of film, and decrease the collection of light from unscratched areas. In contrast to prior systems in which an attempt is made to collect all light, from scratched or unscratched areas, this preferred feature actually reduces light collected from unscratched areas to make the difference in intensity less and hence reduce the visibility of the scratch.

The physical arrangement of the diffuser is preferably to diffuse some light from scratched areas of film into the light collection system, and also preferably to diffuse some light from unscratched areas of film outside the light collection system. As a result, the difference in intensities of light from scratched areas and unscratched areas is reduced.

The diffuser is preferably placed close behind but not immediately adjacent the film, in particular immediately behind a first lens element of the light collection system. This ensures that the diffuser has maximum benefit without the risk that any granularity of the diffuser is imaged on the detector.

The diffuser may be arranged to diffuse light in 360° in all planes, in less than 360° in all planes or, in particular, in 30° in all planes. The wider the diffusion, the less visible scratches become but with a decreased (i.e. worsened) signal to noise ration. The signal to noise ratio can be restored to an acceptable level by known techniques such as the use of Avalanche Photo Diode detectors which have better Quantum Efficiency than the conventional Photo Multiplier Tubes.

We have particularly appreciated that scratches usually occur predominantly in one direction and that a diffuser may be arranged accordingly. Thus in the preferred embodiment the diffuser is arranged to diffuse light predominantly in one plane.

The plane in which light is diffused is orthogonal to the predominant scratch direction. Alternatively, the diffuser is arranged to diffuse light in a wider angle in one plane than in a perpendicular plane, such as 10° in one plane and substantially 60° in the other.

This arrangement ensures that light scattered by scratches is diffused so that a portion is redirected back into the collection system, but without significantly affecting light in the other plan which is unscattered, thereby improving the signal to noise ratio and further reducing scratch visibility.

Embodiments of the invention will now be described in detail, and with reference to the accompanying figures, in which:
- Fig. 1: shows a prior art imaging system of a CRT film scanner;
- Fig. 2: shows the arrangement of Fig. 1, with light rays produced when imaging an imperfection of film;
- Fig. 3: shows an improved light collection system;
- Fig. 4: shows a variation of the light collection system shown in Fig. 3;
- Fig. 5: shows a second variation of the light collection system shown in Fig. 3;
- Fig. 6: shows the angle of acceptance of a light collections system; and
- Fig. 7: shows a light collection system and diffuser embodying the invention.

In the following description the applicability of embodiments of the invention to reducing scratch visibility will be described. However, it should be noted that the invention is applicable to reducing visibility of any imperfections on the film which cause incident light to be scattered. Such imperfections include scratches, dirt or dust.

A basic film scanner will first be described, followed by an improved film scanner incorporating a light collection system incorporating means for directing light to a detector which has been scattered to positions outside an optical system. An embodiment of the invention will then be described with reference to the basic film scanner. It should be noted, however, that the invention is applicable to a film scanner, such as a CRT scanner, with either a basic or improved light collection system as described herein.

A film scanner converts an image stored on film to an image represented by electrical signals. A telecine is one type of film scanner which converts the image to a television signal. A film scanner or telecine comprises a light source for illuminating film, a film gate for holding and transporting film, imaging optics for directing light modulated by the film to a light detector and an electronic system for manipulating and storing the electrical signals from the detector. The types of light source, film gate, detector and electronic system available are well known to the person skilled in the art, and need not be described further here. Suitable examples may, in any case, be found in any of the references noted in the background section above. The following description will concentrate on the imaging optics.

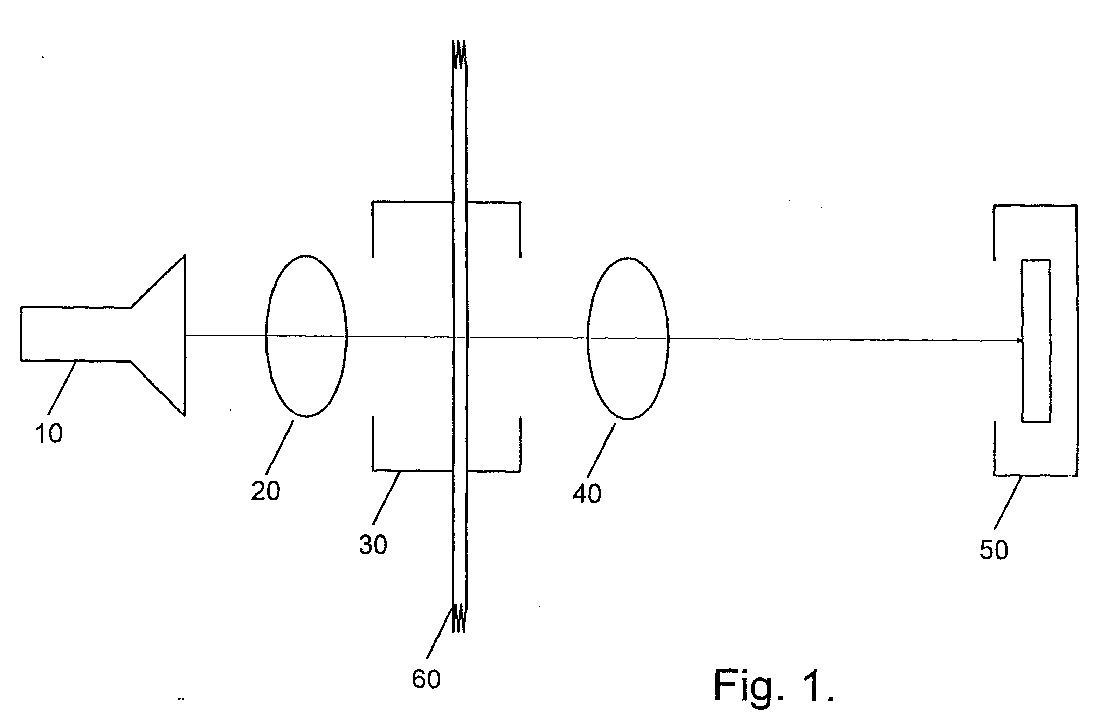

Fig 1. shows the basic CRT, imaging optics, film gate, light collection optics and photo sensor detector elements of a flying spot scanner or telecine. The system shown is a monochrome system but those skilled in the art will appreciate that these principles equally apply to a colour system as taught in the declared background material. The CRT 10 generates a light raster which is focussed via imaging optics 20, onto the film 60 held in the film gate 30. The film 60 is shown in edge view. A condenser lens 40 collects the emerging light from the film 60 and images onto the photo sensor detector 50. The silver halide grains and or dyes in the film emulsion cause a degree of scattering of the light at it traverses through the film. For reasons of clarity this is not portrayed in Fig. 1.

It will be appreciated that the imaging optics 20 and condenser lens 40 could be implemented by a plurality of lenses, and this is within the knowledge of the skilled person. In fact, for 3-colour scanning further optical elements would be required to split the light modulated by the film into separate components for sensing which, again, is within the knowledge of the skilled person. The imaging optics 20 and condenser lens 40 are chosen and arranged such that the condenser lens 40 produces an image of the imaging optics 20 on the photo sensor detector 50. The photo sensor detector is a diffuse detector of circular cross section.

The arrangement shown in Fig. 1 is typically mounted in a casing with an internal substantially non-reflective coating, such as black paint.

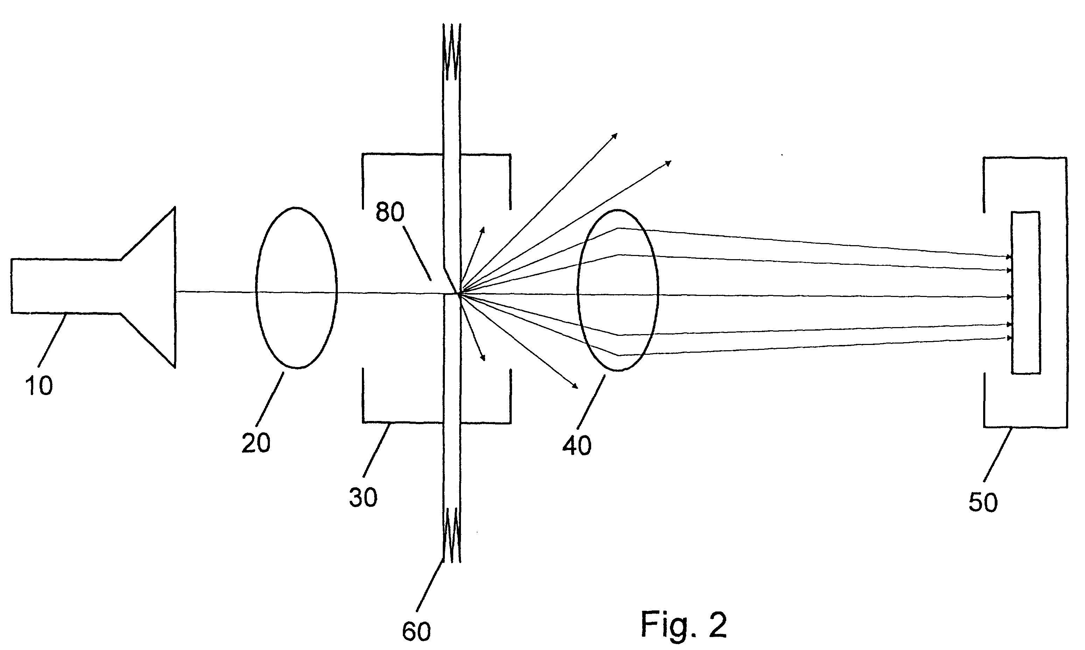

Fig. 2 shows the same basic arrangement as given in Fig. 1, however now the film 60 includes a scratch 80 which causes scattering of the incident light. The result is that whilst many of the scattered rays are collected by the condenser lens 40, some of the light rays are so scattered that they fail to be imaged onto the photo sensor detector 50. The result is that since less light is collected by the photo sensor the scratch becomes visible as it forms a further modulation to the light in addition to that caused by the silver halide, and or dye, particles in the film emulsion. We have appreciated that if these lost light rays can be collected, then the visibility of the scratch on the film would be diminished, if not eliminated altogether.

There are two film surfaces, the Mylar or Acetate surface, and the emulsion surface. Either of these surfaces may incur scratches. If a scratch occurs in the Mylar or Acetate surface then the scattered light rays will illuminate film pixels other than just that determined by the temporal: spatial relationship of the light raster. These scattered rays will therefore cause a muddying of the true value of the pixel being scanned, however since the scattering is on a microscopic scale the scattered rays will illuminate film image pixels adjacent to the correct pixel and will therefore normally be of a related nature. Thus the act of collecting these scattered rays will still lessen the visibility of the scratch. If the scratch occurs on the film emulsion surface then provided the scratch does not totally eliminate the film image i.e. scrape off the entire emulsion over the film area affected, then the scattered light rays will produce relevant light values when collected and conveyed to the photo sensor detector. Again this will diminish the visibility of the scratch. If the scratch is sufficient to have removed the film image emulsion then the scattering of the light to illuminate adjacent film image pixels will, once these rays are collected, help to mask the scratch, but the scratch remains visible as an imperfection in the detected image.

As previously discussed the problem of film scratch and dirt visibility with a flying spot scanner or telecine cannot be alleviated by illuminating the film with diffuse light. The invention is therefore particularly applicable to flying spot scanners, and other scanners where the illuminating spot is image onto the film such as laser scanners and rotating mirror scanners.

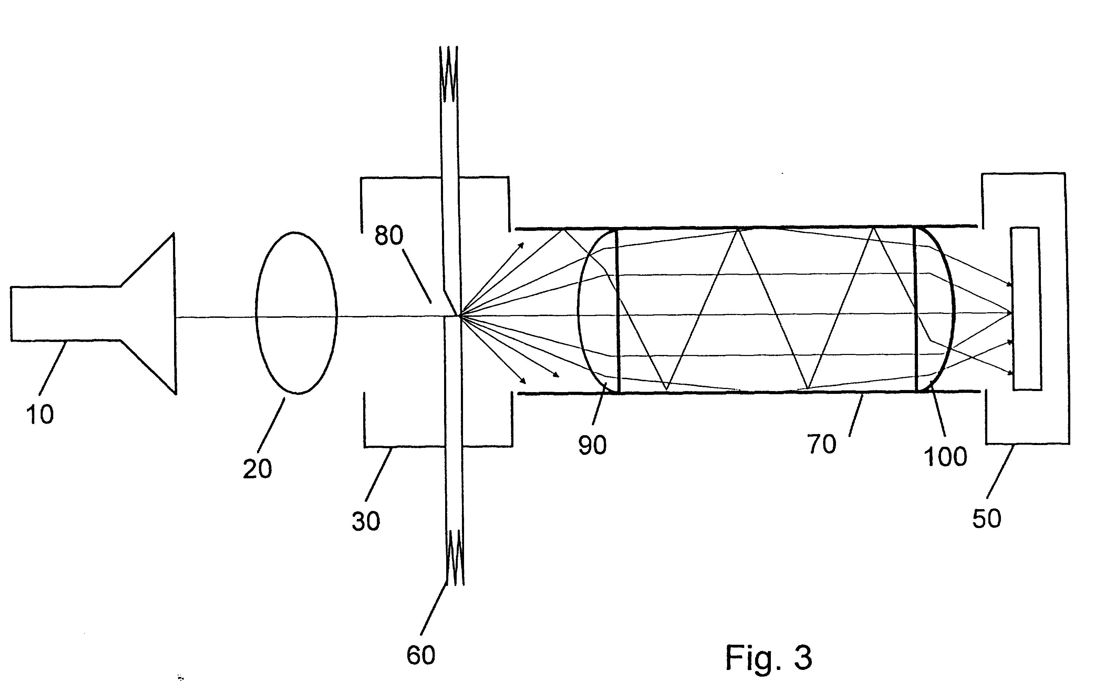

An improved film scanner is portrayed in Fig. 3. The scanner comprises a light source in the form of a CRT 10 focussed by a lens 20 onto the film 60. A light collection system comprises an optical system comprising a plano-convex lens 90, and a further plano-convex lens 100 which image light from the film onto the photo sensor. The light collection system also comprises means for directing light shown here as a reflector which may comprise one or more sections, but is preferably a single piece internally highly reflective cylinder 70. The principle of operation is that light rays which do not directly couple to lens 90, for example those rays which would have failed to be collected by lens 40 in Fig. 2, are reflected at the internal surface of cylinder 70 and thence are relayed by lens 90 to the interior of the cylinder where they either couple directly to lens system 100, or due to their trajectory incur further reflections on the interior surface of cylinder 70 until finally coupling to lens 100, whence they are imaged on to the photo sensor detector. Similarly, light which couples to the lens 90, but which would otherwise be lost outside the lens system is reflected at the internal surface of the cylinder 70 and couples to the lens system 100.

The typical dimensions are chosen for scanning 35 mm film. Accordingly, the diameter of the cylinder 70, the lens 90 and lens system 100 is around 50 mm. The photo sensor 50 could be a similar diameter, but is preferably around 10 mm. Clearly lens systems 90 and 100 may be other than the plano convex versions described. The cylinder 70 may be constructed from glass, plastic or metal. Although described as a cylinder, the device could be any appropriate reflective surface which increases the quantity of light scattered by imperfections which reaches the film. A square cross section could also be appropriate, as could other polygonal shapes. A cylinder offers the advantage of maximising the light directed to the sensor and fits conveniently to the lenses.

For the circumstance where there is fine dirt on the first surface of the film this may result in the incident light being diffracted sufficiently that it still enters the film at adjacent locations and thereby produces a degree of relevant light to be collected by the light collection system 70,90, 100 and imaged onto the sensor 50.

For the case of the dirt being on the second surface of the film the incident light will have been scattered and diffracted by the grains in the film emulsion and hence be of a diffuse nature such that a significant amount of light will emerge from the film to be collected by the light collection system 70,90, 100 and imaged onto the sensor 50.

For colour flying spot film scanner or telecine systems the reflecting cylinder 70, and associated optics 90 and 100, would directly couple between the film gate 30, the entry optics of the red, green, blue light splitter cell box, and throughout the colour splitter box.

The diameter of the collection lenses 90, 100 and cylinder 70 would ideally be constructed to have as large a diameter as possible for a given application. This rule would also apply to the dichroic splitting mirrors, further optics and sensors.

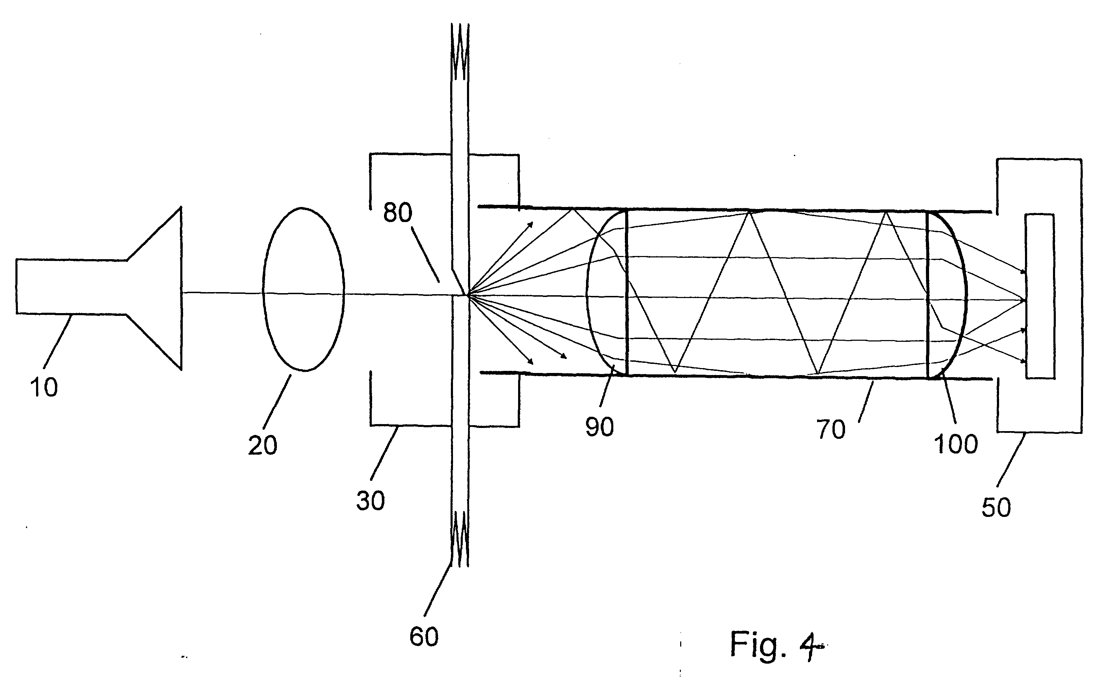

A variation of the arrangement shown in Fig. 3 in which the reflective surface of the cylinder is extended toward the film is shown in Fig. 4. All light scattered by imperfections is useful to reducing the visibility of the imperfections. Accordingly, in this arrangement the part of the reflective surface between the first lens 90 and the film is extended to be as close to the film as possible, perhaps with a gap of a few millimetres.

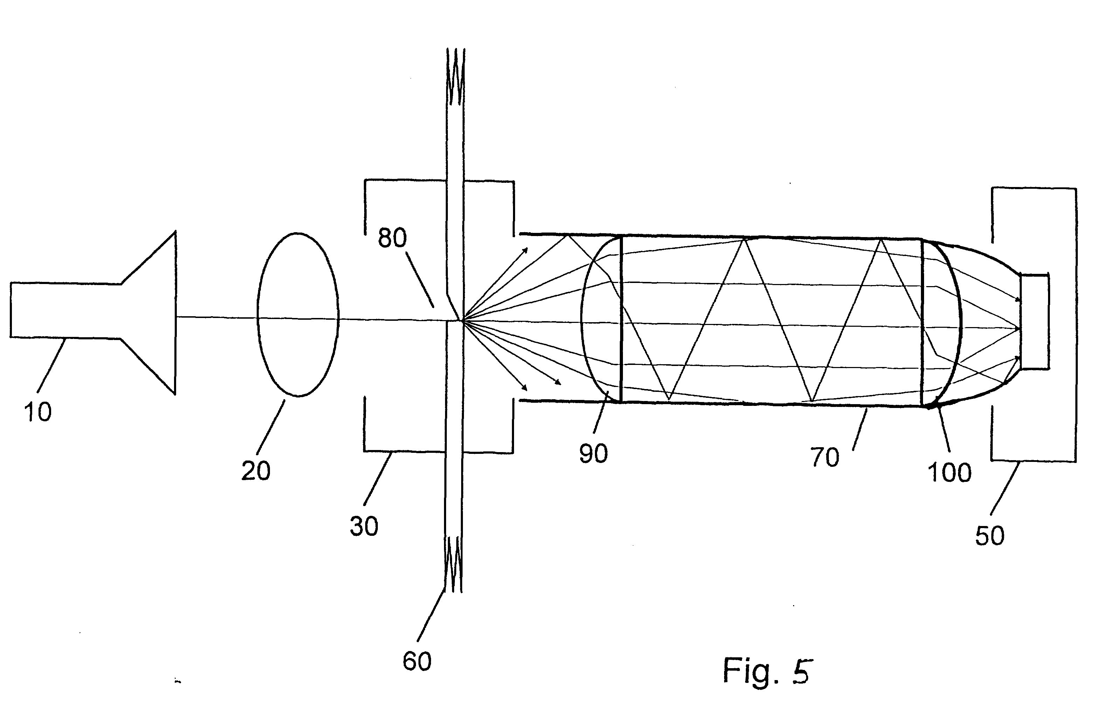

A second variation is shown in Fig. 5. Here, the reflective surface of the cylinder is shaped in the region between the imaging optics 100 and the photo sensor 50. The shaping is chosen to reduce the cylinder diameter from around 50 mm to the size of the photo sensor of around 10 mm. The shaping may be curved, a truncated cone or a series of truncated cones of increasing angle.

The arrangement described has reflective surfaces for directing light to the photo sensor in 3 regions:
(i) in the region between the film and the first element of the imaging system;
(ii) in between elements of the imaging system; and
(iii) between the last element of the imaging system and the photo sensor.

Appropriate reflectors may be used in each of these regions above, or in combination, and particularly as shown in Figs 3, 4 and 5 alone or in combination. The reflector chosen could be diffuse or specular.

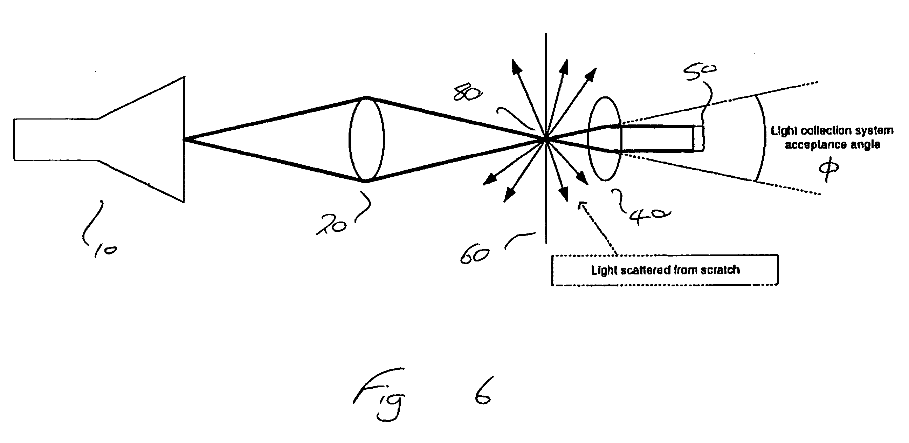

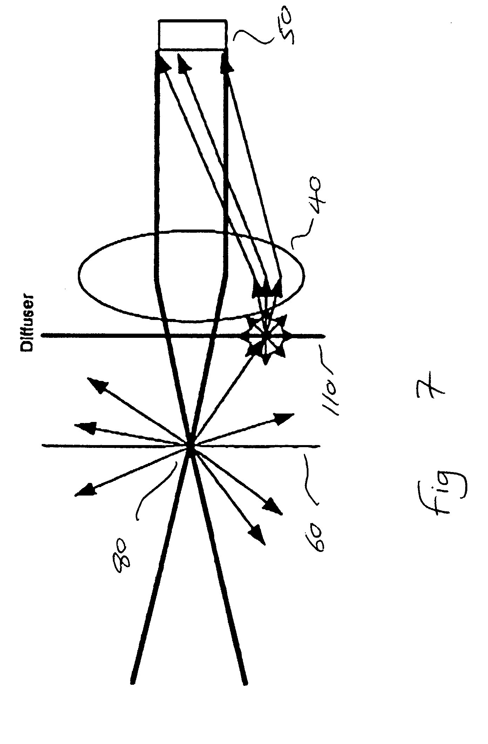

The embodiment of the invention will now be described with reference to the previous figures 6 and 7. The same numbering is used for simplicity.

A film scanner embodying the invention includes a CRT 10, imaging optics 20 and film gate 30 as previously described with reference to figure 1, and shown in part in figure 6. The present description concentrates on light collection. Light illuminating the film 60 is modulated by the film and imaged onto a detector 50 via imaging optics in the form of a condenser lens 40. As previously noted, the present invention may also be embodied in combination with the improved light collections system, in which case the imaging optics 40 will include directing means 70 as shown in figures 3,4 and 5.

As shown in figure 6, a scratch 80 causes scattering of light so that some of the scattered light is not imaged onto the detector 50 by the light collections system. The angle of acceptance of the light collections system is φ steradians.

The embodiment includes a diffuser 110 which will now be described. The diffuser 110 may be any material which by reflection, diffraction, refraction, or interference effects, spreads the energy of an incident light ray into a full solid angle of 4n steradians, or 360° spread in all planes. Suitable material would be ground glass, opal glass, holograms, paper and others.

A disadvantage of this diffusion is that only the proportion φ/4π of light from undamaged areas of film is collected by the collection system , but has the following advantage. Consider light rays scattered from the scratch or dust particle which without a diffuser would be outside the acceptance angle of the light collection system: with the inclusion of the diffuser, a proportion of the energy in these rays is sent into the light collection system. The result is that a greater proportion of scattered light to unscattered light is accepted by the light collection system than if no diffuser were used and so scratches and dust are less visible, as shown in figure 7. If the diffuser is too close to the film, then any granularity of the diffuser may be imaged. If the diffuser is too far away, the size of the diffuser and the collection optics must be increased to catch the extreme ray angles. In practice, in the embodiment, the diffuser is placed immediately behind the first lens element of the light collection system.

If the amount of light lost using a 360° spread is considered too high, a compromise can be made by using a material with a diffusion, diffractions or scattering angle less than 360° such as a holographic diffuser or pair of crossed diffraction gratings.

This allows more of the unscattered light from the film to enter the light collections system compared with a 360° spread, but still has the benefit of sending some scattered light from dust or scratches into the light collection system. The scratch would be hidden to a lesser extent than using a diffuser with a 360° spread, but with the advantage that more light overall is collected by the collection system giving an improved signal to noise ratio.

If the scratch or dust scatters the incident light into a limited range of angles rather than a full 360° spread in all planes, a material with a diffraction angle similar to the scattering angle range of the scratch allows the most efficient means of sending a fraction of the scattered light into the acceptance angle of the light collection system. A preferred 30° diffusion angle material is chosen, such as a holographic diffuser from Edmund scientific, part no H54501.

We have found that if a film contains scratches predominantly in one direction, then a better result can be achieved for scratch concealment by using a diffuser which distributed light predominantly in one plane, such as an elliptical holographic diffuser or a diffraction grating. In such a case, the wider diffusing axis is aligned to the axis on the film with the wider scattering angle. This will be in a plane orthogonal to the scratch direction. In this case, little or no loss of light into the collection system can be achieved in the plane of the scratch. In the other plane, the light scattered by the scratch has a proportion diffracted back into the acceptance angle of the light collection system. Hence scratch concealment is produced in just one plane, allowing a greater light throughput to the light collection system. Again, for best efficiency, the diffuser is matched to the angular scattering range of the scratch. The preferred choice of diffuser is a 10°x 60° elliptical holographic diffuser from Edmund scientific, contained in kit part no H53874. When aligned correctly this can greatly reduce the visibility of vertical scratches.

## Claims

**1.** A film scanner for producing electrical signals from a film image, comprising: a light source for illuminating film; and a light collection system for directing light modulated by the film to a light detector; and further comprising a diffuser for diffusing light modulated by film arranged to reduce the visibility of imperfections on film, wherein the light collection system is so arranged to image light diffused by the diffuser onto the detector.

**2.** A film scanner according to claim 1, wherein the diffuser is so arranged to diffuse light from scratched and unscratched areas of film.

**3.** A film scanner according to claim 1 or 2, wherein the diffuser is so arranged to reduce the difference in intensity of light from scratched and unscratched areas of film.

**3.** A film scanner according to claim 1, 2 or 3, wherein the diffuser is so arranged to increase the collection of light from scratched areas of film, and decrease the collection of light from unscratched areas.

**4.** A film scanner according to any preceding claim, wherein the diffuser is so arranged to diffuse some light from scratched areas of film into the light collection system.

**5.** A film scanner according to any preceding claim, wherein the diffuser is so arranged to diffuse some light from unscratched areas of film outside the light collection system.

**6.** A film scanner according any preceding claim, wherein the diffuser is arranged between the film and a first lens element of the light collection system.

**7.** A film scanner according to any preceding claim, wherein the diffuser is arranged immediately behind a first lens element of the light collection system.

**8.** A film scanner according to any preceding claim, wherein the diffuser is arranged to diffuse light in substantially 360° in all planes.

**9.** A film scanner according to any of claims 1 to 7, wherein the diffuser is arranged to diffuse light in less than substantially 360° in all planes.

**10.** A film scanner according to any of claims 1 to 7, wherein the diffuser is arranged to diffuse light in substantially 30° in all planes.

**11.** A film scanner according to any of claims 1 to 7, wherein the diffuser is arranged to diffuse light predominantly in one plane.

**12.** A film scanner according to any of claims 1 to 7, wherein the diffuser is arranged to diffuse light in a wider angle in one plane than in a perpendicular plane.

**13.** A film scanner according to claim 12, wherein the diffuser is arranged to diffuse light substantially 10° in one plane and substantially 60° in the other.

**14.** A film scanner according to claim 12 or 13, wherein the diffuser is arranged to diffuse light in a wider angle in a plane orthogonal to a scratch direction.

**15.** A light collection system for a film scanner for producing electrical signals from a film image, the film scanner comprising: a light source for illuminating film; the light collection system comprising means for directing light modulated by the film to a light detector; and further comprising a diffuser for diffusing light modulated by film arranged to reduce the visibility of imperfections on film, wherein the light collection system is so arranged to image light diffused by the diffuser onto the detector.

**16.** A light collection system according to claim 15, wherein the diffuser is so arranged to diffuse light from scratched and unscratched areas of film.

**17.** A light collection system according to claim 15 or 16, wherein the diffuser is so arranged to reduce the difference in intensity of light from scratched and unscratched areas of film.

**18.** A light collection system according to claim 15, 16 or 17, wherein the diffuser is so arranged to increase the collection of light from scratched areas of film, and decrease the collection of light from unscratched areas.

**19.** A light collection system according to any of claims 15 to 18, wherein the diffuser is so arranged to diffuse some light from scratched areas of film into the light collection system.

**20.** A light collection system according to any of claims 15 to 19, wherein the diffuser is so arranged to diffuse some light from unscratched areas of film outside the light collection system.

**21.** A light collection system according any of claims 15 to 20, wherein the diffuser is arranged between the film and a first lens element of the light collection system.

**22.** A light collection system according to any of claims 15 to 21, wherein the diffuser is arranged immediately behind a first lens element of the light collection system.

**23.** A light collection system according to any of claims 15 to 22, wherein the diffuser is arranged to diffuse light in substantially 360° in all planes.

**24.** A light collection system according to any of claims 15 to 22, wherein the diffuser is arranged to diffuse light in less than substantially 360° in all planes.

**25.** A light collection system according to any of claims 15 to 22, wherein the diffuser is arranged to diffuse light in substantially 30° in all planes.

**26.** A light collection system according to any of claims 15 to 22, wherein the diffuser is arranged to diffuse light predominantly in one plane.

**27.** A light collection system according to any of claims 15 to 23, wherein the diffuser is arranged to diffuse light in a wider angle in one plane than in a perpendicular plane.

**28.** A light collection system according to claim 27, wherein the diffuser is arranged to diffuse light substantially 10° in one plane and substantially 60° in the other.

**29.** A light collection system according to claim 12 or 13, wherein the diffuser is arranged to diffuse light in a wider angle in a plane orthogonal to a scratch direction.

**30.** A film scanner or light collection system according to any preceding claim, wherein the diffuser comprises a holographic diffuser.

**31.** A film scanner or light collection system according to any preceding claim, wherein the diffuser comprises a diffraction grating.

**32.** A film scanner or light collection system according to any preceding claim, wherein the diffuser comprises an elliptical holographic diffuser.

**33.** A film scanner or light collection system according to any preceding claim, wherein the diffuser comprises a pair of crossed diffraction gratings.
